# EUROPÄISCHE PATENTSCHRIFT

(11) **EP 0 477 767 B1**
(45) Veröffentlichungstag und Bekanntmachung des Hinweises auf die Patenterteilung: **21.12.1994**
(21) Anmeldenummer: 91115897.0
(22) Anmeldetag: 19.09.1991
(51) Int. Cl.: F16H 57/04

(54) **Ölversorgung in einem Getriebegehäuse aus Gussmetall**
Oil feed arrangement in a cast metal transmission housing
Alimentation en huile dans un carter de transmission en métal coulé

(30) Priorität: 22.09.1990 DE 4030097
(43) Veröffentlichungstag der Anmeldung: 01.04.1992
(73) Patentinhaber: DEERE & COMPANY, Moline, Illinois 61265 (US)
(72) Erfinder: Springer, Klaus, Dipl.-Ing., W-4404 Telgte (DE)
(74) Vertreter: Feldmann, Bernhard

(56) Entgegenhaltungen:
- AU-B- 5 631 480
- FR-A- 2 025 019
- US-A- 2 492 831
- US-A- 2 984 122
- US-A- 3 719 253

## Beschreibung

Die Erfindung betrifft eine Ölversorgung gemäß den Merkmalen des Oberbegriffs des Patentanspruchs 1 Viele Getriebe werden mit Öl geschmiert, indem Öl durch eine Ölpumpe zu den Lagerstellen und Zahnrädern des Getriebes gepumpt wird. Das Öl sammelt sich auf dem Boden des Getriebegehäuses und wird durch eine Ölansaugleitung wieder der Ölpumpe zugeführt, wodurch sich ein geschlossener Ölkreislauf bildet. Das Getriebegehäuse enthält Öldurchgangsöffnungen, die durch Rohrleitungen mit einer außerhalb des Getriebegehäuses angeordneten Ölpumpe verbunden sind. Als Verbindungen für die einzelnen Ölleitungsabschnitte können Verschraubungen oder dergleichen dienen, die entsprechende Dichtungen enthalten.

Neben oder an Stelle einer Schmierölpumpe kann auch eine einen Hydraulikkreis speisende Hydraulikpumpe ihr Öl aus dem Ölsumpf des Getriebegehäusebodens beziehen.

Bei einem aus unterschiedlichen Gehäuseabschnitten zusammengesetzten Getriebe kann eines der Getriebegehäuse, beispielsweise das Differentialgetriebegehäuse, als Ölsammelbehälter oder Ölsumpf dienen.

Die Rohrleitungen beanspruchen außerhalb des Getriebegehäuses Platz, der eigens hierfür freigehalten werden muß und die Zugänglichkeit in der Nähe befindlicher Aggregate erschweren kann. Die Rohrmontage erfordert eine Reihe von Montageschritten und ist zeit- und kostenaufwendig. Ferner treten an jeder Verbindungsstelle Dichtungsprobleme auf.

Aus dem DE-U- 74 00 787 und dem DE-U- 17 29 913 ist es bekannt, Ölleitungen in die Wandungen von Getriebegehäusen oder ähnlichen Bauteilen vorzusehen. Es handelt sich bei diesen Ölleitungen offenbar um Kanäle, die erst nach der Fertigung der äußeren Kontur des Bauteiles in diese durch Bohren oder dergleichen eingebracht werden. Diese Kanäle dienen vorwiegend der Durchführung durch das Bauteil und ersetzen keine Rohrleitungen zwischen einem Ölsumpf und einer Pumpe.

Ferner ist es aus der DE-A1-38 38 442 bekannt, eine Pumpenanordnung in einem Getriebe vorzusehen, bei der in die Gehäusewand radial zur Pumpenachse verlaufende Ölkanäle eingegossen sind, die direkt in einen Pumpenstutzen übertreten. Näheres über die Kanäle oder einen Ölkreislauf ist dieser Schrift jedoch nicht entnehmbar.

Es sind auch Aluminium- und Magnesiumteile bekannt (Karl-Heinz Bode: Konstruktionsatlas; Verlag Hoppenstedt & Co.; 2. Auflage, 1983, Seite 14 - ISBN 3-8203-0062-7), bei dem mehrfach abgewinkelte Schmierkanäle im Inneren eines Teiles geführt werden. Die Kanäle sollen sich beim Gießverfahren mit einem durchgehenden Kern in der Form risikolos realisieren lassen. Dieses Verfahren läßt sich jedoch nicht auf die Herstellung von Fahrzeuggetriebegehäusen übertragen, da letztere im allgemeinen unter Zuhilfenahme von Sandkernen aus Grauguß oder dergleichen gefertigt werden. Der in der zitierten Veröffentlichung skizzierte Kern läßt sich jedoch aus Stabilisierungsgründen kaum als Sandkern aufbauen.

Aus der US-A-3,719,253 geht ein Schmiersystem mit den gattungsgemäßen Merkmalen hervor. Hier besteht das Getriebegehäuse aus zwei Teilen, die gemeinsam eine Getriebekammer bilden. Die Wandung des ersten Getriebeteils trägt im Bodenbereich, der als Ölsumpf dient, ein Ende eines Siebes. Dieses Ende ist über ein Rohrstück mit einer Öffnung in der Wandung des zweiten Getriebeteils verbunden. Innerhalb der Wandung des zweiten Getriebeteils befindet sich ein eingegossener Kanal, der die Öffnung mit einer in die Gehäusewandung eingelassenen Vertiefung verbindet. In dieser Vertiefung ist eine Zahnradpumpe integriert. Die Vertiefung ist durch eine Pumpenabdeckung verschlossen. Insbesondere durch die Ausbildung des Rohrstückes und der Vertiefung ist auch diese Ausbildung noch recht aufwendig.

Die mit der Erfindung zu lösende Aufgabe wird darin gesehen, ein Getriebegehäuse aus Gußmetall anzugeben, mit dessen Verwendung sich ein montagefreundlicher, wenig oder keinen zusätzlichen Platz beanspruchender und kostengünstiger Ölkreislauf aufbauen läßt.

Die Aufgabe wird erfindungsgemäß durch ein Getriebe gemäß den Merkmalen des Patentanspruches 1 gelöst.

Der Ölkanal wird dadurch gebildet, daß beim Gießen ein geeigneter Kern in den der Gehäusewandung entsprechenden Hohlraum eingesetzt wird. Damit ist der Ölkanal im Getriebegehäuse integriert und verläuft im wesentlichen zwischen einer innerhalb des Getriebegehäuses liegenden Öffnung und einer im Außenbereich des Getriebegehäuses mündenden Austrittsöffnung. Durch den Ölkanal wird die Getriebegehäusewandung nicht auf kürzestem Weg überwunden, indem der Ölkanal im wesentlichen senkrecht zur Getriebegehäusewandung verläuft. Vielmehr erstreckt sich der Ölkanal über längere Abschnitte innerhalb der Getriebegehäusewandung und zwar im wesentlichen parallel zur Wandungsoberfläche. Die innere Öffnung ist als Ansaugstelle ausgebildet.

Die erfindungsgemäße Lösung ist kostengünstig herstellbar, montagefreundlich und erfordert wenig Platz, da die Zahl der Rohrleitungen, Verzweigungen und Verschraubungen reduziert werden kann. Die Kosten, die beim Gießen für die Anfertigung eines dem Ölkanal entsprechenden Sandkerns entstehen, liegen erheblich unter den Kosten für eine aus mehreren Rohrstücken und Verschraubungen sowie Verzweigungen zusammengesetzte Rohrleitung. Die bisherige in mehreren Einzelschritten erfolgende und Dichtigkeitsprobleme mit sich bringende Rohrleitungsmontage kann weitgehend entfallen. An ihre Stelle tritt beim Ausbilden der Gießform das einfache Beilegen des Sandkerns auf den Hauptkern des Getriebegehäuses, der den Getriebegehäuseinnenraum ausformt. Ein reduzierter Platzbedarf resultiert aus dem Wegfall der Rohrleitungen, die bisher außerhalb des Getriebegehäuses verlegt wurden. Der erfindungsgemäße Ölkanal liegt in einem bisher ungenutzten Bereich.

Die Ölpumpe kann gemäß einer bevorzugten Weiterbildung der Erfindung auf einen oben liegenden Flansch des Getriebegehäuses auf dieses aufgesetzt und durch Verschrauben befestigt sein. Hierbei kann es sich beispielsweise um eine am Getriebegehäuse befestigte Ladepumpe und eine der Ladepumpe nachgeordnete Hochdruckhydraulikpumpe handeln. Vorzugsweise befinden sich dabei die Austrittsöffnung des Ölkanals und die Ansaugöffnung der Ölpumpe innerhalb des beispielsweise durch eine Papierdichtung abgedichteten Flanschbereiches der Ölpumpe. Hierdurch entfallen zusätzliche Montagearbeiten und Dichtungen. Durch Aufschrauben der Ladepumpe wird unmittelbar der Ansauganschluß hergestellt und abgedichtet.

Um dem Gußkern für den Ölkanal beim Gießen des Getriebegehäuses einen statisch sicheren Halt zu geben, ist es zweckmäßig, die Ansaugstelle und die Austrittsöffnung des Ölkanals jeweils als Kernlager für den Guß auszubilden. Nach dem Gießen können diese Öffnungen noch einer mechanischen Bearbeitung unterzogen werden, um sie an weitere Anforderungen anzupassen.

Diese Kernlager eröffnen neben ihrer Aufgabe, während des Gießens als Kernstabilisierung zu dienen, die Möglichkeit, nach dem Gießen eine Sichtkontrolle oder andere Überprüfungen der Ölkanalinnenwandung bezüglich Kernsandresten oder anderer Verunreinigungen ohne Schwierigkeiten durchführen zu können. Diese Kontrolle ist für einen gegossenen Ölkanal von Bedeutung, wenn Öl aus dem Ölkanal direkt und ungefiltert in die Pumpe und in einen gegen Verschmutzung empfindlichen Ölkreis (z. B. Hydraulikkreis) gefördert wird. Bei mechanisch, beispielsweise durch Bohren, nachbearbeiteten Öldurchtrittsöffnungen gemäß dem Stand der Technik ist hingegen eine besondere Überprüfung auf Gußrückstände meist nicht erforderlich.

Bei einem längeren Ölkanal ist der statische Halt durch lediglich zwei Kernlager nicht immer ausreichend. Daher ist gemäß einer vorteilhaften Weiterbildung der Erfindung zwischen Ansaugstelle und Austrittsöffnung des Ölkanals wenigstens eine weitere als Kernlager für den Gießvorgang geeignete Öffnung vorgesehen. Hierdurch kann beim Gießen ein längerer Ölkanalkern abgestützt werden. Ferner kann bei einem verwinkelten Ölkanal nach dem Gießen leichter festgestellt werden, ob der Ölkanal frei von Formsand und anderen Gußrückständen ist, die mit dem Öl zur Ölpumpe und ungefiltert in den Ölkreislauf gelangen könnten. Gußrückstände können erforderlichenfalls durch die Sichtfenster entfernt werden. Die Sichtfenster lassen sich durch Flansche, die beispielsweise an einem angrenzenden weiteren Getriebegehäuse angeordnet sind, unter Verwendung von Papierdichtungen verschließen. Somit ist der Ölkanal zur Ölansaugung durch die Pumpe funktionsfähig verschlossen, und es kann keine schädliche Luft angesaugt werden, die z. B. eine Ladepumpe zum Leerlaufen bringen könnte.

Die Ansaugstelle des Ölkanals steht mit einem Ölfilter in Verbindung, durch das das Öl beim Ansaugen aus dem Bodenbereich des Getriebegehäuses tritt. Bei dem Ölfilter kann es sich zweckmäßigerweise um ein zylinderförmiges Ölsieb handeln, das lediglich an einer Stirnseite offen ist und hier in die Ansaugstelle des Ölkanals mündet, die als Kernlager ausgebildet und so aufgebohrt ist, daß sie das Ölsieb aufnehmen und axial und radial führen kann. Das Ölfilter kann versteift ausgebildet sein und sich auf dem Boden des Getriebegehäuses abstützen.

Einer weiteren bevorzugten Ausgestaltung der Erfindung zufolge verzweigt sich der Ölkanal innerhalb des Getriebegehäuses und enthält wenigstens je eine Austrittsöffnung für wenigstens eine Hydraulikpumpe und für wenigstens eine Getriebeölpumpe. Auf diese Weise wird das im Getriebegehäuse befindliche Öl über den Ölkanal an zwei Ölpumpen geleitet. Zum einen handelt es sich um eine Hydraulikpumpe, die direkt mit einem Pumpenflansch über einer als Kernlager ausgebildeten Austrittsöffnung des Getriebegehäuses unter Beilage einer Papierdichtung geschraubt wird, wobei sich innerhalb der Dichtung die Ansaugöffnung befindet. Zum anderen wird eine Getriebeölpumpe über eine Rohrleitung mit einer weiteren als Kernlager ausgebildeten Ansaugöffnung verbunden.

Weitere vorteilhafte Ausgestaltungen und Weiterbildungen der Erfindung gehen aus den Unteransprüchen hervor.

Anhand der Zeichnung, die ein Ausführungsbeispiel der Erfindung zeigt, sollen die Erfindung sowie weitere Vorteile und vorteilhafte Weiterbildungen und Ausgestaltungen der Erfindung näher beschrieben und erläutert werden.

Es zeigt:

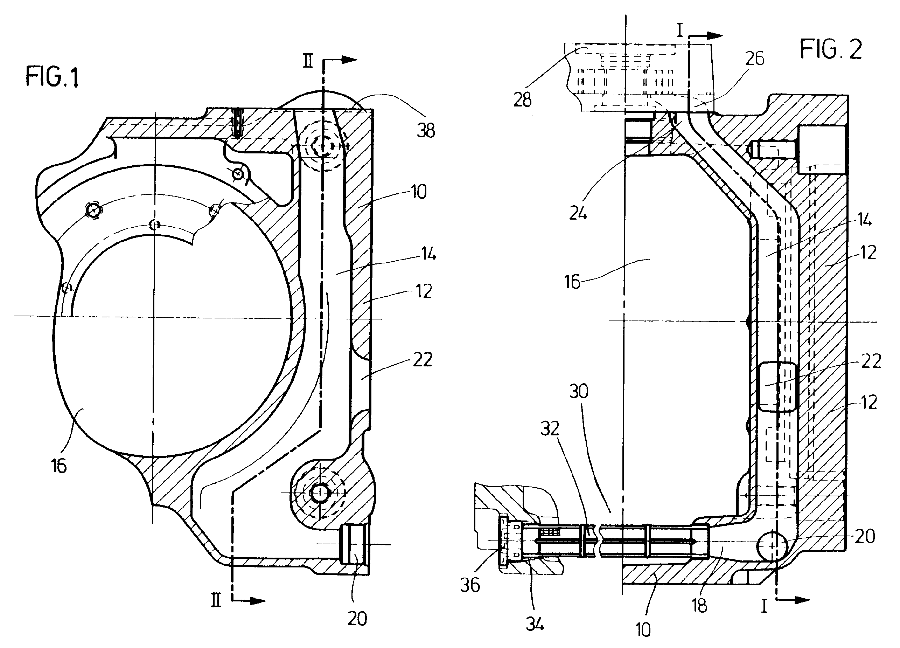

Fig. 1 und Fig. 2 je einen Schnitt durch einen Teil eines erfindungsgemäßen Getriebegehäuses, wobei der Schnitt der Fig. 1 längs der Linie I-I in Fig. 2 und der Schnitt der Fig. 2 längs der Linie II-II in Fig. 1 verläuft.

Bei dem in der Zeichnung dargestellten Getriebegehäuse 10 handelt es sich um ein Differentialgetriebegehäuse im Antriebsstrang eines landwirtschaftlichen Schleppers. Das eigentliche Getriebe innerhalb des Getriebegehäuses 10 wurde in der Zeichnung nicht dargestellt.

Das Getriebegehäuse 10 besteht aus Gußmetall, beispielsweise Grauguß, Stahlguß, Kugelgraphitguß, Buntmetallguß. In die Gehäusewandung 12 ist ein Ölkanal 14 eingezogen bzw. eingegossen, der über vier Öffnungen mit dem Getriebeinneren 16 beziehungsweise dem Getriebeäußeren in Verbindung steht. Bei den Öffnungen handelt es sich um eine innere Eintrittsöffnung 18, eine äußere Anschlußöffnung 20 für eine nicht dargestellte Getriebeölpumpe, eine äußere Öffnung 22, die als Sichtfenster für die Überprüfung des Ölkanals 14 dient, und eine äußere Austrittsöffnung 24, an die die Ansaugöffnung 26 einer in Fig. 2 angedeuteten Ladepumpe 28 angeschlossen ist. Der Ölkanal 14 ist an die Kontur der Gehäusewandung 12 angepaßt und verläuft über große Strecken im wesentlichen parallel zur Gehäusewandungsoberfläche.

Die Herstellung des Ölkanals kann in der Weise erfolgen, daß in den Hohlraum der Gießform für die Getriebewandung 12 ein Gießkern eingelegt wird, der der Kontur und Lage des Ölkanals 14 entspricht, welcher grundsätzlich einen beliebigen verwinkelten Verlauf einnehmen kann. Der Gießkern stützt sich im vorliegenden Fall über vier Kernlager ab, die die genannten vier Öffnungen bilden. Bei der Formgebung des Gießkerns und der Kernlager ist darauf zu achten, daß nach Fertigstellung des Gußstückes die Hohlräume durch die Öffnungen gut einsehbar sind, so daß Gußrückstände erkannt und beseitigt werden können. Die Eintrittsöffnung 18 und die Anschlußöffnung 20 sind nach der Herstellung des Gußstückes mechanisch nachbearbeitet, um geeignete Anschlußmöglichkeiten zu schaffen.

Die Eintrittsöffnung 18 mündet im unteren Bereich des Getriebeinneren 16, in dem sich das vom Getriebe rückströmende Öl sammelt und der als Ölsumpf 30 dient. Die Eintrittsöffnung bildet die Ansaugstelle für das Getriebeöl. In einen aufgeweiteten Bereich der Eintrittsöffnung 18 ist das offene Ende eines im wesentlichen zylindrisch ausgebildeten Ölfilters 32 dichtend eingesetzt und wird hier in seiner axialen und radialen Ausrichtung geführt. Das andere Ende des Ölfilters 32 wird durch eine entsprechende Ausnehmung 34, die sich durch die Gehäusewandung 12 erstreckt, aufgenommen. Durch diese Ausnehmung 34 läßt sich das Ölfilter 32 in das Getriebegehäuse 10 einsetzen. Die Ausnehmung 34 ist durch einen einschraubbaren Verschlußstopfen 36 dichtend verschlossen, der gleichzeitig das Ölfilter in seiner axialen Richtung fixiert.

Das Ölfilter 32 besteht im wesentlichen aus einem zylindrischen Käfig, der mit einem Sieb umwickelt ist und nur zu der Eintrittsöffnung 18 des Ölkanals 14 hin offen ist.

Die Anschlußöffnung 20 ist so ausgebildet, daß sich eine nicht dargestellte Rohrleitung anschließen läßt, die den Ölkanal mit einer nicht dargestellten Getriebeölpumpe verbindet. Die Getriebeölpumpe saugt aus dem Ölsumpf 30 Getriebeöl über die Eintrittsöffnung 18, den Ölkanal 14 und die Rohrleitung an und versorgt die Schmierstellen des Getriebes.

In einem mittleren Bereich des Ölkanals 14 ist eine sich nach außen öffnende Öffnung 22 vorgesehen. Diese Öffnung 22 geht auf ein Kernlager zurück, welches den relativ langen Abschnitt des den Ölkanal 14 bildenden Gießkerns beim Guß abstützt. Die Öffnung 22 ist ferner so ausgebildet, daß sich ein großer Bereich des Ölkanals einsehen und auf Gießrückstände untersuchen läßt. Durch die Öffnung 22 läßt sich eine Reinigung des Ölkanals vornehmen; eine mechanische Bearbeitung und Formgebung des Ölkanals ist in der Regel nicht erforderlich. Die Öffnung 22 wird durch die Wandung eines nicht dargestellten angrenzenden Getriebes, beispielsweise eines Schaltgetriebes verschlossen. Dabei sind der die Öffnung 22 umgebende Gehäusebereich und der entsprechende Bereich des angrenzenden Getriebegehäuses flanschartig ausgebildet. Eine zwischen die Flansche eingelegte Papierdichtung stellt die erforderliche Abdichtung sicher.

Ein Bereich der oberen Gehäusefläche ist als Flanschfläche 38 ausgebildet, auf der eine Ladepumpe 28 befestigt ist. Die Austrittsöffnung 24 des Ölkanals 14 und die Ansaugöffnung 26 der Ladepumpe 28 liegen innerhalb des Flanschbereiches und fluchten miteinander. Durch eine auf die Flanschfläche 38 aufgelegte nicht näher dargestellte Papierdichtung wird die Verbindung zwischen Austrittsöffnung 24 und Ansaugöffnung 26 nach außen abgedichtet. Mit dem Anflanschen der Ladepumpe 28 am Getriebegehäuse 10 ist der Ölansauganschluß hergestellt. Es sind keine weiteren Rohrleitungen und Dichtungen sowie Montagearbeiten erforderlich.

Die Ladepumpe 28 ist Teil eines Hydraulikölkreises und saugt Öl durch den als Ölansaugkanal ausgebildeten Abschnitt des Ölkanals 14 an. Sie speist eine nicht dargestellte, unmittelbar über der Ladepumpe 28 montierte Hydraulikhochdruckpumpe, die der Versorgung hydraulischer Abnehmer dient.

## Patentansprüche

1. Ölversorgung mit einem in die Wandung eines Getriebegehäuses (10), insbesondere eines Fahrzeugdifferentialgetriebegehäuses, aus Gußmetall eingezogenen Ölkanal (14), der eine im Getriebegehäuseinnenraum im Bereich eines Ölsumpfes (30) mündende Ansaugstelle (18), an die ein Ölfilter angeschlossen ist, und eine Austrittsöffnung (24) aufweist, die im Bereich einer aus dem Ölsumpf (30) ansaugenden Ölpumpe (28) endet, dadurch gekennzeichnet, daß der Ansaugstelle (18) ein unmittelbar in diese übergehendes Ölfilter (32) vorgeschaltet ist, daß der Ölkanal (14) mehrere aufeinanderfolgende, zueinander abgewinkelte Kanalabschnitte aufweist, daß die Austrittsöffnung (24) auf der Getriebegehäuseoberfläche endet und daß außen am Getriebegehäuse (10) im Bereich der Austrittsöffnung (24) die Ölpumpe (28) angeflanscht ist, wobei die Austrittsöffnung (24) und die Ansaugöffnung (26) der Ölpumpe (28) innerhalb der abgedichteten Flanschverbindungsebene liegen und miteinander fluchten.

2. Ölversorgung nach Anspruch 1, dadurch gekennzeichnet, daß das Ölfilter (32) ein zylinderförmiges Ölsieb ist, dessen eine Stirnseite offen ist und in die Ansaugstelle (18) des Ölkanals (14) mündet.

3. Ölversorgung nach Anspruch 1 oder 2, dadurch gekennzeichnet, daß die Ansaugstelle (18) und die Austrittsöffnung (24) des eingezogenen Ölkanals (14) als Kernlager für den Guß ausbildbar sind.

4. Ölversorgung nach einem der Ansprüche 1 bis 3, dadurch gekennzeichnet, daß zwischen Ansaugstelle (18) und Austrittsöffnung (24) des eingezogenen Ölkanals (14) wenigstens eine weitere als Kernlager für den Gießvorgang geeignete Öffnung (20, 22) vorgesehen ist.

5. Ölversorgung nach Anspruch 4, dadurch gekennzeichnet, daß die Öffnung (20, 22) derart ausgebildet ist, daß sie als Sichtfenster für die Überprüfung des eingezogenen Ölkanals (14) nach dem Gießen geeignet ist.

6. Ölversorgung nach Anspruch 4 oder 5, dadurch gekennzeichnet, daß insbesondere eine als Sichtfenster dienende Öffnung (22) durch die Gehäusewandung eines benachbaten Getriebes, beispielsweise eines Schaltgetriebes, verschließbar ist.

7. Ölversorgung nach einem der Ansprüche 1 bis 6, dadurch gekennzeichnet, daß der eingezogene Ölkanal (14) sich innerhalb des Getriebegehäuses (10) verzweigt und wenigstens je eine Austrittsöffnung (24, 20) für eine als Hydraulikpumpe dienende Ölpumpe (28) und für eine Getriebeölpumpe enthält.

8. Ölversorgung nach einem der Ansprüche 1 bis 7, dadurch gekennzeichnet, daß die Ansaugstelle (18) in einen aufgeweiteten Bereich mündet, in den das offene Ende des Ölfilters (32) eingesetzt ist und der das Ölfilter in seiner axialen und radialen Ausrichtung führt.

9. Ölversorgung nach einem der Ansprüche 1 bis 8, dadurch gekennzeichnet, daß das andere Ende des Ölfilters (32) von einer Ausnehmung (34) in der Gehäusewandung (12) aufgenommen wird, die so bemessen ist, daß sich das Ölfilter (32) durch diese Ausnehmung (34) in das Getriebegehäuse einsetzen läßt.

10. Ölversorgung nach Anspruch 9, dadurch gekennzeichnet, daß die Ausnehmung (34) durch einen einschraubbaren Verschlußstopfen (36) dichtend verschließbar ist, der gleichzeitig das Ölfilter (32) in seiner axialen Richtung fixiert.

## Claims

1. An oil feed arrangement in the wall of a transmission housing (10), especially an inbuilt oil channel (14) formed in a vehicle differential gear housing of cast metal, the channel having a suction point (18) opening to the interior space of the transmission housing in the region of an oil sump (30), where an oil filter is attached, and an outlet opening (24) which ends in the region of an oil pump (28) sucking oil out of the sump (30), characterized in that the suction point (18) is preceded by an oil filter (32) passing directly into this point, in that the oil channel (14) has a plurality of sequential canal sections bent relative to one another, in that the outlet opening (24) ends in the transmission housing surface and in that the oil pump is flanged on to the outside of the transmission housing (10) in the region of the outlet opening (24), wherein the outlet opening (24) and the suction opening (26) of the oil pump (28) lie within the sealed flange attachment plane and register with one another.

2. An oil supply arrangement according to claim 1, characterized in that the oil filter (32) is a cylindrical oil strainer whose end is open and opens into the suction point (18) of the oil channel (14).

3. An oil supply arrangement according to claim 1 or 2, characterized in that the suction point (18) and the outlet opening (24) of the built-in oil channel (14) can be formed as cores seat for the casting.

4. An oil supply arrangement according to any of claims 1 to 3, characterized in that at least on further opening (20, 22) adapted to be a core seat for the casting operation is provided between the suction point (18) and the outlet opening (24) of the built-in oil channel (14).

5. An oil supply arrangement according to claim 4, characterized in that the opening (20, 22) is so formed that it is suitable as a sight window for checking the built-in oil channel (14) after the casting.

6. An oil supply arrangement according to claim 4 or 5, characterized in that especially an opening serving as a sight window (22) can be closed by the housing wall of an adjacent gear, for example a change-speed gear.

7. An oil supply arrangement according to any of claims 1 to 6, characterized in that the built-in oil channel (14) branches within the transmission housing (10) and includes at least one outlet opening (24, 20) for each of an oil pump (28) serving as a hydraulic pump and a transmission oil pump.

8. An oil supply arrangement according to any of claims 1 to 7, characterized in that the suction point (18) opens into a widened region in which the open end of the oil filter (32) is fitted and which guides the oil filter in its axial and radial alignment.

9. An oil supply arrangement according to any of claims 1 to 8, characterized in that the other end of the oil filter (32) is received by a recess (34) in the housing wall (12), which is of such dimensions that the oil filter (32) can be fitted into the transmission housing through this recess (34).

10. An oil supply arrangement according to claim 9, characterized in that the recess (34) can be closed by a screw-in plug (36) which at the same time fixes the oil filter (32) in its axial direction.

## Revendications

1. Système d'alimentation en huile comportant un canal (14) pour l'huile, qui est ménagé dans la paroi d'un carter de transmission (10), notamment d'un carter différentiel de véhicule en fonte et qui comporte une zone d'aspiration (18), qui débouche dans l'espace intérieur du carter de transmission au niveau d'un réservoir d'huile (30) et auquel est raccordé un filtre à huile, et une ouverture de sortie (24), qui se termine au niveau d'une pompe à huile (28) qui réalise une aspiration à partir du réservoir d'huile (30), caractérisé en ce qu'en amont de la zone d'aspiration (18) est monté un filtre à huile (32), qui se prolonge directement par cette zone d'aspiration, que le canal (14) pour l'huile comporte plusieurs sections successives, qui sont coudées les unes par rapport aux autres, que l'ouverture de sortie (24) se termine dans la surface du carter de transmission et que la pompe à huile (28) est raccordée par bride au carter de transmission (10), au niveau de l'ouverture de sortie (24), l'ouverture de sortie (24) et l'ouverture d'aspiration (26) de la pompe à huile (28) étant situées dans le plan de la liaison à bride étanchéifiée et étant alignées l'une sur l'autre.

2. Système d'alimentation en huile selon la revendication 1, caractérisé en ce que le filtre à huile (32) est un tamis à huile de forme cylindrique, dont une face frontale est ouverte et qui débouche dans la zone d'aspiration (18) du canal (14) pour l'huile.

3. Système d'alimentation en huile selon la revendication 1 ou 2, caractérisé en ce que la zone d'aspiration (18) et l'ouverture de sortie (24) du canal aménagé (14) pour l'huile peuvent être réalisées sous la forme du logement de noyau pour la coulée.

4. Système d'alimentation en huile selon l'une des revendications 1 à 3, caractérisé en ce qu'au moins une autre ouverture (20,22) convenant en tant que logement de noyau pour l'opération de coulée est prévue entre la zone d'aspiration, (18) et l'ouverture de sortie (24).

5. Système d'alimentation en huile selon la revendication 4, caractérisé en ce que l'ouverture (20,22) est agencée de telle sorte qu'elle convient en tant que voyant pour le contrôle du canal ménagé (14) pour l'huile, après la coulée.

6. Système d'alimentation en huile selon la revendication 4 ou 5, caractérisé en ce que notamment une ouverture (22) utilisée comme voyant peut être fermée par la paroi du carter d'une transmission voisine, en particulier d'une boîte de vitesses.

7. Système d'alimentation en huile selon l'une des revendications 1 à 6, caractérisé en ce que le canal aménagé (14) pour l'huile se ramifie à l'intérieur du carter de transmission (10) et contient au moins respectivement une ouverture de sortie (24,20) pour une pompe à huile (28) utilisée comme pompe hydraulique et pour une pompe à huile de transmission.

8. Système d'alimentation en huile selon l'une des revendications 1 à 7, caractérisé en ce que la zone d'aspiration (18) débouche dans une partie élargie, dans laquelle est insérée l'extrémité ouverte du filtre à huile (32) et qui place le filtre à huile dans son orientation axiale et radiale.

9. Système d'alimentation en huile selon l'une des revendications 1 à 8, caractérisé en ce que l'autre extrémité du filtre à huile (32) est reçue dans un logement (34) ménagé dans la paroi (12) du carter, et qui est dimensionnée de telle sorte que le filtre à huile (32) peut être inséré dans ce logement (34) dans le carter de transmission.

10. Système d'alimentation en huile selon la revendication 9, caractérisé en ce que le logement (34) peut être fermé par un bouchon de fermeture vissable (36), qui fixe simultanément le filtre à huile (32) dans sa direction axiale.
